# EUROPÄISCHE PATENTSCHRIFT

(11) **EP 3 245 680 B1**
(45) Veröffentlichungstag und Bekanntmachung des Hinweises auf die Patenterteilung: **03.04.2019**
(21) Anmeldenummer: 15788088.1
(22) Anmeldetag: 04.11.2015
(51) Int. Cl.: H01M 2/10, H01M 8/24, H01M 16/00, H02J 7/14, H02J 7/32, H02J 7/34, H01M 10/052, H01M 8/10, H01M 10/06, H01M 8/2475, H01M 8/1018, H02J 1/00

(54) **AUTONOME UNTERWASSERENERGIEVERSORGUNGSVORRICHTUNG**
AUTONOMOUS UNDER WATER POWER SUPPLY DEVICE
DISPOSITIF D'ALIMENTATION EN ÉNERGIE SOUS-MARIN AUTONOME

(30) Priorität: 16.01.2015 DE 102015000257
(43) Veröffentlichungstag der Anmeldung: 22.11.2017
(73) Patentinhaber: ThyssenKrupp Marine Systems GmbH, 24143 Kiel (DE); thyssenkrupp AG, 45143 Essen (DE)
(72) Erfinder: FRÜHLING, Christian, 24103 Kiel (DE); SCHIEMANN, Marc, 24145 Kiel (DE)
(74) Vertreter: thyssenkrupp Intellectual Property GmbH
(86) Internationale Anmeldenummer: PCT/EP2015/075672
(87) Internationale Veröffentlichungsnummer: WO 2016/113010

(56) Entgegenhaltungen:
- GB-A- 1 511 035
- GB-A- 2 250 130
- JP-A- H09 301 273
- US-A1- 2010 041 285

## Beschreibung

Die Erfindung betrifft eine modular aufgebaute, autarke, Unterwasser einsetzbare Energieversorgungsvorrichtung.

Zur Gewinnung von Ressourcen wird zunehmend auf die Meere zurückgegriffen. So werden beispielsweise zunehmend Offshore-Windparks gebaut, Öl und Gas wird bereits seit langer Zeit auch aus großen Tiefen gewonnen.

Es ist jedoch zunehmend aufwändig, die für den Bau und Betrieb der Anlagen notwendige Energie mittels Unterwasserkabeln zur Verfügung zu stellen. Die Verlegung solcher Kabel kann ein entscheidender Kostenfaktor bei der Erschließung sein. Zusätzlich gewinnt die Gewinnung von Rohstoffen in entfernten Bereichen, zum Beispiel unterhalb der Arktis, an Bedeutung. Eine Versorgung ist hier von oberhalb der Wasseroberfläche teilweise nicht möglich oder aufgrund der dann erforderlichen langen Zuleitungen nicht wirtschaftlich.

Es hat sich daher als vorteilhaft erwiesen, Vorrichtungen bereit zu stellen, welche in der Lage sind, die benötigte elektrische Energie vor Ort und somit unter Wasser bereit zu stellen.

Aus der EP 2 666 956 A1 ist eine modulare elektrische Vorrichtung bekannt, welche sich unter Wasser befindet und die unter hohem Druck in großen Tiefen, in denen elektrische Energie benötigt wird, eingesetzt werden kann.

Aus der EP 2 194 638 A2 ist ein modulares Unterwasser-Stromversorgungssystem bekannt.

Aus der WO 2014/065926 A2 ist ein Tauchstromversorgungsgerät bekannt, welches die Möglichkeit bietet, Leistung zum Aufladen von Batterien zu verwenden.

Aus der WO 01/91206 A2 ist eine Brennstoffzelle zur Energieversorgung unter Wasser bekannt.

Aus der US 2010/041285 A ist ein autonomes Überwasserfahrzeug bekannt.

Aus der JP H09 301273 A ist eine Vorrichtung mit einer Speicherbatterie in einem Container bekannt.

Aus der GB 1511 035 A ist ein Unterseebbot-Tanker bekannt, wobei zwei getrennte Frachtdruckkörper verwendet werden.

Aus der GB 2 250 130 A ist ein elektrisches Energieerzeugungssystem bekannt.

Problematisch ist jedoch, dass die benötigten Energiemengen sehr unterschiedlich ausfallen können. Zum Beispiel wird während Bohrarbeiten oder Rammarbeiten eine sehr große Energiemenge in vergleichsweise kurzer Zeit und somit eine hohe Leistung benötigt. In anderen Anwendungen wie Monitoring oder Steuerung von kleineren Unterwasseranlagen wird im Regelbetrieb wird oftmals eine sehr geringe Leistung in der Grundlast über einen sehr langen Zeitraum benötigt, wobei zeitweise die benötigte Leistung kurzfristig deutlich höher sein kann.

Es stellt sich somit die Aufgabe, eine Vorrichtung bereit zu stellen, welche unter Wasser, autonom und unabhängig von einer Verbindung zu einem Versorgungssystem elektrische Energie für Verbraucher mit sehr unterschiedlichen Leistungscharakteristika und Energiecharakteristik bereit zu stellen.

Gelöst wird die Aufgabe durch eine Energieversorgungsvorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Energieversorgungsvorrichtung weist wenigstens ein erstes Modul und ein zweites Modul auf. Die Energieversorgungsvorrichtung weist einen ersten Druckkörper auf ist dadurch unter Wasser einsetzbar. Das erste Modul weist den ersten Druckkörper auf und das zweite Modul weist einen zweiten Druckkörper auf. Das erste Modul und das zweite Modul sind unabhängig voneinander ausgewählt aus der Gruppe der umgebungsluftunabhängigen Leistungserzeugern, die ein Batteriemodul, ein Brennstoffzellenmodul, ein Stirlingmotor, eine Walter-Turbine und ein außenluftunabhängiges Dieselmodul umfasst. Vorteil der erfindungsgemäßen Energieversorgungsvorrichtung ist die einfache Anpassbarkeit an die Anforderung zur Bereitstellung von Energie. Da jedes Modul einen eigenen Druckkörper aufweist, können die Module in einfacher Weise bedarfsgerecht zusammengestellt werden. Batteriemodule sind in der Lage eine große Spitzenleistung bereitzustellen, weisen jedoch nur eine geringe Energie auf. Brennstoffzellenmodule und außenluftunabhängige Dieselmodule sind in der Lage, deutlich größere Mengen an Energie abzugeben, haben jedoch eine deutlich geringere Leistung. Durch die Kombination dieser verschiedenen Techniken ist es möglich, eine Energieversorgungsvorrichtung zu schaffen, welche sowohl die benötigte Spitzenleistung als auch die benötigte Energie zu liefern in der Lage ist. Vorteilhafter Weise kann ein Batteriemodul durch anderes Modul, wie z. B. ein Brennstoffzellenmodul oder ein außenluftunabhängiges Dieselmodul, wieder aufgeladen werden. Die Energieversorgungsvorrichtung weist eine Anschlussmöglichkeit für einen elektrischen Verbraucher auf. Die Anschlussmöglichkeit kann in einem Modul enthalten sein.

Vorzugsweise ist Energieversorgungsvorrichtung für einen Einsatz von mindestens bis zu 100 m, weiter bevorzugt für einen Einsatz von mindestens bis zu 300 m, weiter besonders bevorzugt für einen Einsatz von mindestens bis zu 3.000 m und weiter bevorzugt für einen Einsatz von mindestens bis zu 6.000 m Tiefe geeignet.

In einer weiteren Ausführungsform sind der erste Druckkörper und der zweite Druckkörper zylindrisch ausgeführt und weisen jeweils an den Stirnseiten ein erstes Kugelsegment und ein zweites Kugelsegment auf. Diese Kugelsegmente werden auch Kalotte genannt. Vorzugsweise ist mindestens ein Kugelsegment jedes Druckkörpers schwenkbar mit dem zylindrischen Teil des Druckkörpers verbunden. Alternativ vorzugsweise kann mindestens ein Kugelsegment jedes Druckkörpers auch abnehmbar sein. Bevorzugt ist jeweils genau ein Kugelsegment jedes Druckkörpers schwenkbar mit dem zylindrischen Teil des Druckkörpers verbunden. Hierdurch ist es möglich, die Einbringung der Geräte in das Innere der Druckkörper einfach zu gestalten. Gleichzeitig ist ein Druckkörper hierdurch sehr stabil auch für große Tauchtiefen auslegbar. Weitere Druckkörper weiterer Module sind entsprechend ausgeführt.

In einer weiteren Ausführungsform weisen die Druckkörper Versteifungsringe, sogenannte Spanten, auf, wobei die Versteifungsringe auf der Außenseite der Druckkörper angeordnet sind. Vorteil der Anordnung der Versteifungsringe auf der Außenseite ist, dass der Innenbereich plan ist und so die Geräte leicht in den Druckkörper eingebracht und dort befestigt werden können. Da die Energieversorgungsvorrichtung Unterwasser auf einer festen Position verbleibt, ist es nicht notwendig, das Äußere der Druckkörper strömungsoptimiert auszuführen, wie dieses beispielsweise bei Unterseebooten der Fall ist.

In einer weiteren Ausführungsform weisen die Druckkörper eine Länge von einem 40-Fuß-Standardcontainers (40 Fuß = 12 m) auf. Hierdurch haben die Module eine Abmessung, welche in erster Näherung 12m entspricht. Hierdurch ist eine vergleichsweise einfache Handhabung möglich. Zum Zusammenbau und Transport können somit bereits verfügbare Anlagen verwendet werden. Die Energieversorgungsvorrichtung weist vorzugsweise eine Länge von 12,5 m bis 13,5 m auf. In einer alternativen Ausführungsform weisen die Druckkörper eine Länge von einem 20-Fuß-Standardcontainers (20 Fuß = 6 m) auf. Vorzugsweise weisen bei jeder der vorgenannten Ausführungsformen die Druckkörper und/oder die Module Verbindungsmittel auf mit denen sie auf dem Schiff befestigt werden können und Anschlagmittel für Hebewerkzeuge. Insbesondere sind die Verbindungsmittel sogenannte Containerecken.

Die Vorrichtung weist ein Batteriemodul auf. Das Batteriemodul weist Batterieelemente und vorzugsweise einen Umrichter, ein Batterieüberwachungssystem, eine Trenneinheit, eine Kontrolleinheit, einen Transformator und/oder eine Kühleinheit auf. Die vorgenannten Bestandteile sind vorteilhafter Weise in Baugruppen gefasst, wobei die Baugruppen vorteilhafter Weise einen runden Querschnitt aufweisen, wobei der Querschnitt der Baugruppen geringfügig kleiner als der Innendurchmesser des Druckkörpers ist. Hierdurch wird das Volumen des Batteriemoduls optimal ausgenutzt, um eine maximale Energiemenge zur Verfügung zu stellen. Zur Wartung oder Reparatur können die Baugruppen aus dem Druckkörper entnommen werden. Hierzu weist der Druckkörper vorzugsweise mindestens eine verschwenkbare Kalotte auf. Die Baugruppe, welche einen Inverter, ein Batterieüberwachungssystem, eine Trenneinheit, eine Kontrolleinheit einen Transformator und/oder eine Kühleinheit aufweist, wird vorzugsweise auf der verschwenkbaren Kalotte abgewandten Seite angeordnet. Die Batterieelemente sind vorzugsweise in mehreren Baugruppen angeordnet, wobei eine Baugruppe mit Batterieelementen vorzugsweise eine Dicke von 0,5m bis 2 m aufweist. Besonders bevorzugt sind die Baugruppen mit den Batterielementen auf Schienen beweglich gelagert, so dass die Baugruppen einfacher in ihre Endpostion im Druckkörper verbracht und wieder entnommen werden können.

Das Batteriemodul weist Batterieelemente auf. Bevorzugt sind die Batterieelemente aus der Gruppe umfassend Blei-Gel-Akkumulator und Lithium-Ionen-Akkumulator ausgewählt.

In einer weiteren Ausführungsform weist die Vorrichtung ein Batteriemodul auf, wobei der Druckkörper des Batteriemoduls einen Durchmesser von etwa 2 m aufweist. Geringere Durchmesser haben sich als weniger wirtschaftlich erwiesen, da bei geringeren Durchmessern der Anteil des Druckkörpers am Gesamtgewicht zunimmt. Ebenso steigt der relative Kostenanteil, welcher durch den Druckkörper entsteht. Besonders bevorzugt beträgt der Durchmesser etwa 2 m und die Länge etwa 12 m. Hierdurch entspricht ein Batteriemodul in seinen Abmaßen einem 40-Fuß-Standardcontainer und kann entsprechend einfach gehandhabt werden. Für ein Batteriemodul dieser Ausmaße ergibt sich ein Bereich gespeicherter Energie von 250kWh bis 5000kWh. Bevorzugt kann durch Auswahl der Batterieart und Anzahl der Batteriezellen die speicherbare Energie des Batteriemoduls gewählt werden. Beispielsweise kann sich bei Verwendung von Lithium-Ionen-Zellen eine gespeicherte Energie von etwa 2.500 kWh oder bei Verwendung von Blei-Gel-Zellen von etwa 750 kWh ergeben.

In einer weiteren Ausführungsform weist die Vorrichtung ein Brennstoffzellenmodul auf, wobei der Druckkörper des Brennstoffzellenmoduls einen Durchmesser von etwa 3 m aufweist. Ein Durchmesser des Druckkörpers von etwa 3 m hat sich als vorteilhaft erwiesen, um die neben den Brennstoffzellen auch die Steuerungs- und Regelungstechnik, sowie die weiteren Komponenten, beispielsweise Umspannvorrichtungen, Pumpen und Verdichter aufnehmen zu können. Wird als Sauerstoffquelle flüssiger Sauerstoff verwendet, kann auch ein Verdampfer für Sauerstoff vorhanden sein. Vorteilhafter Weise sind die verschiedenen Komponenten in getrennten Baugruppen mit kreisförmigen Querschnitt montiert. Zur Wartung und Reparatur können diese dann aus dem Druckkörper entnommen werden. Dieses ermöglicht einen kompakten Aufbau und somit eine insgesamt kleine Baugröße.

In einer weiteren Ausführungsform weist die Vorrichtung ein Brennstoffzellenmodul auf, wobei das Brennstoffzellenmodul wenigstens einen ersten Brennstoffzellentank für Sauerstoff und wenigstens einen zweiten Brennstoffzellentank für Wasserstoff aufweist. Der erste Brennstoffzellentank für Sauerstoff kann vorzugsweise als Drucktank für gasförmigen Sauerstoff oder als Tank für flüssigen Sauerstoff ausgeführt sein. Der zweite Brennstoffzellentank für Wasserstoff kann vorzugsweise als Drucktank für gasförmigen Wasserstoff oder als Metallhydridspeicher ausgeführt sein. Besonders bevorzugt sind der erste Brennstoffzellentank und der zweite Brennstoffzellentank außerhalb des Druckkörpers angeordnet.

In einer weiteren Ausführungsform weist die Vorrichtung ein Brennstoffzellenmodul auf, wobei das Brennstoffzellenmodul eine Polymerelektrolytmembran-Brennstoffzelle aufweist. Polymerelektrolytmembran-Brennstoffzellen haben den Vorteil einer geringen Betriebstemperatur. Somit kann auf eine aufwändige Temperierung verzichtet werden.

In einer weiteren Ausführungsform weist die Vorrichtung ein außenluftunabhängiges Dieselmodul auf, wobei der Druckkörper des außenluftunabhängigen Dieselmoduls einen Durchmesser von 3 m aufweist. Ein Durchmesser des Druckkörpers von etwa 3 m hat sich als vorteilhaft erwiesen, um die neben dem Dieselgenerator auch die Steuerungs- und Regelungstechnik, sowie die weiteren optionale Komponenten, beispielsweise Umspannvorrichtungen, einen CO₂-Absorber und ein Wasser-Management-System aufnehmen zu können. Wird als Sauerstoffquelle flüssiger Sauerstoff verwendet, kann auch ein Verdampfer für Sauerstoff vorhanden sein. Vorteilhafter Weise sind die verschiedenen Komponenten in getrennten Baugruppen mit kreisförmigen Querschnitt montiert. Zur Wartung und Reparatur können diese dann aus dem Druckkörper entnommen werden. Dieses ermöglicht einen kompakten Aufbau und somit eine insgesamt kleine Baugröße. Ein CO₂-Absorber kann vorteilhafter Weise so ausgebildet sein, dass das bei der Verbrennung entstehende CO₂ in Meerwasser gelöst und an die Umgebung abgegeben wird. Um den Druck im Kreislauf aufrecht zu erhalten, kann vorteilhafterweise Argon eingesetzt werden.

In einer weiteren Ausführungsform weist die Vorrichtung ein außenluftunabhängiges Dieselmodul auf, wobei das außenluftunabhängige Dieselmodul wenigstens einen ersten Dieselmodultank für flüssigen Sauerstoff und wenigstens einen zweiten Dieselmodultank für Diesel aufweist. Der ersten Dieselmodultank und der zweite Dieselmodultank Tank sind besonders bevorzugt außerhalb des Druckkörpers angeordnet. In einer weiteren Ausführungsform können der ersten Dieselmodultank und der zweite Dieselmodultank in einer von der Energieversorgungsvorrichtung getrennten Vorratsvorrichtung untergebracht sein, wobei die Energieversorgungsvorrichtung und die Vorratsvorrichtung mittels druckfesten Schläuchen oder Rohren miteinander verbunden sind. Dieses hat den Vorteil, dass die Vorratsvorrichtung unabhängig von der Energieversorgungsvorrichtung ausgetauscht werden kann. Hierdurch kann der Betrieb der Energieversorgungsvorrichtung auch für einen langen Zeitraum auch an unzugänglichen Orten gewährleistet werden.

In einer weiteren Ausführungsform weist die Vorrichtung ein außenluftunabhängiges Dieselmodul auf, wobei das außenluftunabhängige Dieselmodul einen Absorber aufweist. Der Absorber dient dazu, dass durch die Verbrennung des Diesels entstandene CO₂ aus dem geschlossenen Kreislauf zu entfernen. Besonders bevorzugt, wird das CO₂ durch Meerwasser absorbiert und so an die Umgebung abgegeben. Alternativ kann der Absorber auch CO₂ chemisch binden.

Erfindungsgemäß weist die Vorrichtung ein Rahmengestell auf, wobei die Module mit dem Rahmengestell verbunden sind. Der Vorteil dieser Ausführungsform ist, dass die Energieversorgungsvorrichtung selber vergleichsweise leicht ist, zugleich aber stabil genug ist, die Module aufzunehmen. Dazu kommt, dass in einem Rahmengestell die Module vergleichsweise einfach eingebracht und ausgetauscht werden können. Auch ist eine Einbringung der Module erst Unterwasser am Einsatzort möglich, wenn die Energieversorgungsvorrichtung mit allen Modulen insgesamt zu schwer ist, um als Ganzes über Wasser effizient bewegt und zum Einsatzort verbracht zu werden. Insbesondere sind die Gewichte der Module so gewählt, dass sie mit üblichen Hebemitteln auf dem Transportschiff bewegt werden können. Besonders bevorzugt ist das Gewicht der Module geringer als 150 t. Erfindungsgemäß ist das erste Modul ein Batteriemodul und das zweite Modul ausgewählt aus der Gruppe umfassend ein Brennstoffzellenmodul, ein Stirlingmotor, eine Walter-Turbine und ein außenluftunabhängiges Dieselmodul. Besonders bevorzugt ist das zweite Modul aus der Gruppe umfassend ein Brennstoffzellenmodul und ein außenluftunabhängiges Dieselmodul.

In einer weiteren Ausführungsform weist die Vorrichtung ein drittes Modul auf, wobei das dritte Modul ein weiteres Batteriemodul ist. Für die meisten Anwendungen hat es sich als ausreichend erwiesen, für die Grundlast ein einzelnes Brennstoffzellenmodul oder ein außenluftunabhängiges Dieselmodul vorzuhalten. Um jedoch auch Spitzenlasten abfangen zu können, sind zwei Batteriemodule vorteilhaft, da die in einem Batteriemodul gespeicherte Energie gering ist. Zum anderen kann durch die Verwendung von zwei Batteriemodulen ein optimales Batteriemanagement verwendet werden, welches die Lebensdauer der Batterien optimal ausnutzt. Die Batteriemodule werden, sofern keine Spitzenlast benötigt wird, durch das Brennstoffzellenmodul oder das außenluftunabhängige Dieselmodul aufgeladen.

In weiteren Ausführungsformen sind insbesondere Kombinationen von einem Modul ausgewählt aus der Gruppe umfassend ein Brennstoffzellenmodul, ein Stirlingmotor, eine Walter-Turbine und ein außenluftunabhängiges Dieselmodul, sowie vier, sechs oder acht Batteriemodule bevorzugt.

Nachfolgend ist die erfindungsgemäße Energieversorgungsvorrichtung anhand eines in den Zeichnungen dargestellten Ausführungsbeispiels näher erläutert.
- Figur 1:: Darstellung einer Energieversorgungsvorrichtung mit drei Modulen
- Figur 2:: Darstellung eines Batteriemoduls
- Figur 3:: Darstellung eines außenluftunabhängigen Dieselmoduls
- Figur 4:: Darstellung eines Brennstoffzellenmoduls

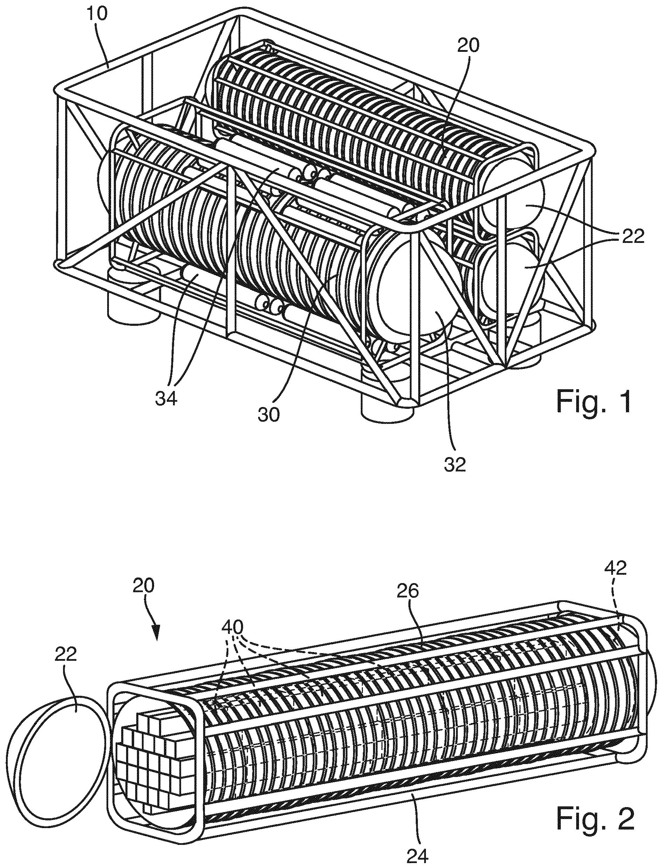

In Figur 1 ist eine beispielhafte Energieversorgungsvorrichtung dargestellt. Diese weist ein Rahmengestell 10 auf. In dem Rahmengestell 10 befinden sich drei Module, zwei Batteriemodule 20 und ein Brennstoffzellenmodul 30. Die Module weisen eine Länge von etwa 12 m auf, die Druckkörper der Batteriemodule 20 weisen einen Durchmesser von etwa 2 m und der Druckkörper des Brennstoffzellenmoduls einen Durchmesser von etwa 3 m auf. Das Rahmengestell 10 weist eine Länge von etwa 14 m, eine Breite von etwa 6,5 m und eine Höhe von etwa 5 m auf. Die Batteriemodule 20 weisen schwenkbare Kalotten 22 und das Brennstoffzellenmodul 30 eine schwenkbare Kalotte 32 auf. Zusätzlich weist das Brennstoffzellenmodul 30 Drucktanks 34 auf, in welchen Wasserstoff bzw. Sauerstoff unter Druck gasförmig gespeichert ist. Eine solche Energieversorgungsvorrichtung kann zum einen eine kurzfriste hohe Leistung liefern, zum anderen durch das Brennstoffmodul 30 eine geringe Grundlast für einen sehr langen Zeitraum abdecken.

In Figur 2 ist ein Batteriemodul 20 halbtransparent dargestellt. Der Zugang zum Druckkörper 26 erfolgt über die schwenkbare Kalotte 22. An dem der schwenkbaren Kalotte 22 gegenüberliegenden Ende des Druckkörpers 26 ist eine Steuerbaugruppe 42 angeordnet, welche einen Inverter, ein Batterieüberwachungssystem, eine Trenneinheit, eine Kontrolleinheit und eine Kühleinheit aufweist. Des Weiteren sind in dem Batteriemodul 20 sechs Baugruppen mit Batterieelementen 40 angeordnet, welche einen Durchmesser von etwa 2 m und eine Tiefe von etwa 1,8 m aufweisen. Die Batterieelemente sind kompakt angeordnet, da eine Wartung während des Einsatzes unter Wasser nicht erfolgt. Zur Wartung und Reparatur werden die Baugruppen mit Batterieelementen 40 durch die schwenkbare Kalotte 22 aus dem Druckkörper 26 entfernt, während sich das Batteriemodul 20 an Land oder auf einem Wartungsschiff befindet.

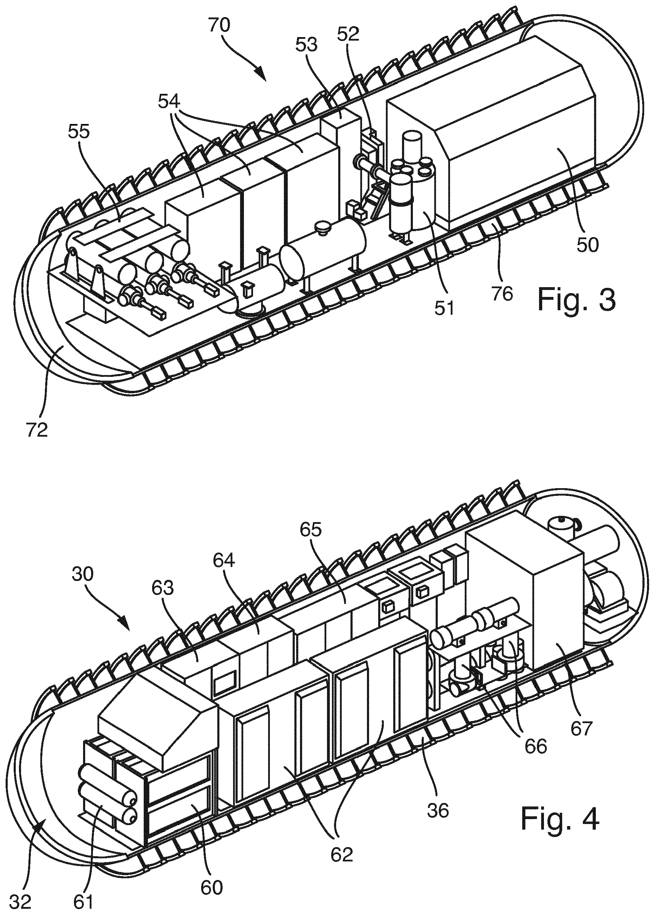

Figur 3 zeigt ein außenluftunabhängiges Dieselmodul 70 mit einem Druckkörper 76 und einer schwenkbaren Kalotte 72. Im Inneren des Druckkörpers 76 werden die Baugruppen vorzugsweise entsprechend ihrer jeweiligen Wartungsanfälligkeit angeordnet, wobei die Baugruppe mit der geringsten Wartungsanfälligkeit auf der der schwenkbaren Kalotte 72 abgewandten Seite angeordnet ist. Das außenluftunabhängige Dieselmodul 70 enthält einen Dieselgenerator 50. Zur Abführung des bei der Verbrennung entstehenden CO₂ ist ein Absorber 51 vorhanden, in welchem das CO₂ in Meerwasser gelöst und an die Umgebung abgegeben wird. Des Weiteren kann über den Wärmetauscher 52 die thermische Prozessführung gewährleistet werden. Des Weiteren enthält das außenluftunabhängige Dieselmodul 70 einen Schaltschrank 53 und Schaltbretter 54 sowie ein Wasser-Management-System 55. Vorratstanks für Diesel und flüssigen Sauerstoff sind außerhalb des Druckbehälters 76 angeordnet und nicht dargestellt. Der Druckbehälter 76 weist eine Länge von etwa 12 m und einen Durchmesser von etwa 3 m auf.

Figur 4 zeigt ein Brennstoffzellenmodul 30 mit einem Druckkörper 36 mit schwenkbarer Kalotte 32. Im Inneren des Druckkörpers 36 werden die Baugruppen vorzugsweise entsprechend ihrer jeweiligen Wartungsanfälligkeit angeordnet, wobei die Baugruppe mit der geringsten Wartungsanfälligkeit auf der der schwenkbaren Kalotte 32 abgewandten Seite angeordnet ist. Im Druckkörper 36 befindet sich die Brennstoffzelle 60, vorzugsweise eine Polymerelektrolytmembran-Brennstoffzelle. Zur Verwendung von flüssigem Sauerstoff als Oxidationsmittel verfügt das Brennstoffzellenmodul 30 über einen Verdampfer 61. Ferner weist das Brennstoffzellenmodul 30 einen Gleichstromwandler 62, einen Leitstand 63, einen Schaltschrank 64, einen zusätzlichen Schaltschrank 65 sowie Pumpen 66 und einen Kompressor 67 auf. Der Druckbehälter 36 weist eine Länge von etwa 12 m und einen Durchmesser von etwa 3 m auf.

### Bezugszeichen:

- 10: Rahmengestell der Energieversorgungsvorrichtung
- 20: Batteriemodul
- 22: schwenkbare Kalotte des Batteriemoduls
- 24: Rahmengestell des Batteriemoduls
- 26: Druckkörper des Batteriemoduls
- 30: Brennstoffzellenmodul
- 32: schwenkbare Kalotte des Brennstoffzellenmoduls
- 34: Drucktanks
- 36: Druckkörper des Brennstoffzellenmoduls
- 40: Baugruppe mit Batterieelementen
- 42: Steuerbaugruppe
- 50: Dieselgenerator
- 51: Absorber
- 52: Wärmetauscher
- 53: Schaltschrank
- 54: Schaltbrett
- 55: Wasser-Management-System
- 60: Brennstoffzellen
- 61: Verdampfer
- 62: Gleichstromwandler
- 63: Leitstand
- 64: Schaltschrank
- 65: zusätzlicher Schaltschrank
- 66: Pumpen
- 67: Kompressor
- 70: außenluftunabhängiges Dieselmodul
- 72: schwenkbare Kalotte des außenluftunabhängigen Dieselmodul
- 76: Druckkörper des außenluftunabhängigen Dieselmodul

## Patentansprüche

1. Energieversorgungsvorrichtung, wobei die Energieversorgungsvorrichtung wenigstens ein erstes Modul und ein zweites Modul aufweist, wobei die Energieversorgungsvorrichtung einen ersten Druckkörper aufweist und dadurch unter Wasser einsetzbar ist, **dadurch gekennzeichnet, dass** das erste Modul den ersten Druckkörper aufweist und dass das zweite Modul einen zweiten Druckkörper aufweist, wobei das erste Modul und das zweite Modul unabhängig voneinander ausgewählt sind aus der Gruppe der umgebungsluftunabhängigen Leistungserzeuger, wobei die Gruppe der umgebungsluftunabhängigen Leistungserzeuger ein Batteriemodul (20), ein Brennstoffzellenmodul (30), ein Stirlingmotor, eine Walter-Turbine und ein außenluftunabhängiges Dieselmodul (70) umfasst, wobei die Vorrichtung ein Rahmengestell (10) aufweist, wobei die Module mit dem Rahmengestell (10) verbunden sind, wobei das erste Modul ein Batteriemodul ist, wobei das zweite Modul ausgewählt ist aus der Gruppe umfassend ein Brennstoffzellenmodul, ein Stirlingmotor, eine Walter-Turbine und ein außenluftunabhängiges Dieselmodul.

2. Energieversorgungsvorrichtung nach Anspruch 1, **dadurch gekennzeichnet, dass** der erste Druckkörper und der zweite Druckkörper zylindrisch ausgeführt sind und jeweils an den Stirnseiten ein erstes Kugelsegment und ein zweites Kugelsegment aufweisen, wobei mindestens ein Kugelsegment jedes Druckkörpers schwenkbar ist.

3. Energieversorgungsvorrichtung nach einem der vorangegangenen Ansprüche, **dadurch gekennzeichnet, dass** die Druckkörper eine Länge von 40 Fuss (12 m) aufweisen.

4. Energieversorgungsvorrichtung nach einem der vorangegangenen Ansprüche, **dadurch gekennzeichnet, dass** die Vorrichtung ein Batteriemodul (20) aufweist, wobei das Batteriemodul (20) Batterieelemente aufweist, wobei das Batteriemodul (20) weiter einen Inverter, ein Batterieüberwachungssystem, eine Trenneinheit, eine Kontrolleinheit, einen Transformator und/oder eine Kühleinheit aufweist.

5. Energieversorgungsvorrichtung nach einem der vorangegangenen Ansprüche, **dadurch gekennzeichnet, dass** die Vorrichtung ein Batteriemodul (20) aufweist, wobei der Druckkörper des Batteriemoduls (20) einen Durchmesser von etwa 2 m aufweist.

6. Energieversorgungsvorrichtung nach einem der vorangegangenen Ansprüche, **dadurch gekennzeichnet, dass** die Vorrichtung ein Brennstoffzellenmodul (30) aufweist, wobei der Druckkörper des Brennstoffzellenmoduls (30) einen Durchmesser von etwa 3 m aufweist.

7. Energieversorgungsvorrichtung nach einem der vorangegangenen Ansprüche, **dadurch gekennzeichnet, dass** die Vorrichtung ein Brennstoffzellenmodul (30) aufweist, wobei das Brennstoffzellenmodul (30) wenigstens einen ersten Brennstoffzellentank für Sauerstoff und wenigstens einen zweiten Brennstoffzellentank für Wasserstoff aufweist.

8. Energieversorgungsvorrichtung nach einem der vorangegangenen Ansprüche, **dadurch gekennzeichnet, dass** die Vorrichtung ein Brennstoffzellenmodul (30) aufweist, wobei das Brennstoffzellenmodul (30) eine Polymerelektrolytmembran-Brennstoffzelle aufweist.

9. Energieversorgungsvorrichtung nach einem der vorangegangenen Ansprüche, **dadurch gekennzeichnet, dass** die Vorrichtung ein außenluftunabhängiges Dieselmodul (70) aufweist, wobei der Druckkörper des außenluftunabhängigen Dieselmoduls (70) einen Durchmesser von etwa 3 m aufweist.

10. Energieversorgungsvorrichtung nach einem der vorangegangenen Ansprüche, **dadurch gekennzeichnet, dass** die Vorrichtung ein außenluftunabhängiges Dieselmodul (70) aufweist, wobei das außenluftunabhängige Dieselmodul (70) wenigstens einen ersten Dieselmodultank für flüssigen Sauerstoff und wenigstens einen zweiten Dieselmodultank für Diesel aufweist.

11. Energieversorgungsvorrichtung nach einem der vorangegangenen Ansprüche, **dadurch gekennzeichnet, dass** die Vorrichtung ein außenluftunabhängiges Dieselmodul (70) aufweist, wobei das außenluftunabhängige Dieselmodul (70) einen Absorber (51) aufweist.

12. Energieversorgungsvorrichtung nach einem der vorangegangenen Ansprüche, **dadurch gekennzeichnet, dass** die Vorrichtung ein drittes Modul aufweist, wobei das dritte Modul ein weiteres Batteriemodul (20) ist.

## Claims

1. Energy supply apparatus, wherein the energy supply apparatus comprises at least a first module and a second module, wherein the energy supply apparatus comprises a first pressure vessel and can therefore be used underwater, **characterized in that** the first module comprises the first pressure vessel and **in that** the second module comprises a second pressure vessel, wherein the first module and the second module are chosen independently of each other from the group of air-independent power generators, wherein the group of air-independent power generators comprises a battery module (20), a fuel cell module (30), a Stirling motor, a Walter turbine and an air-independent Diesel module (70), wherein the apparatus comprises a framework (10), wherein the modules are connected to the framework (10), and wherein the first module is a battery module, wherein the second module is chosen from the group comprising a fuel cell module, a Stirling motor, a Walter turbine or an air-independent Diesel module.

2. Energy supply apparatus according to Claim 1, **characterized in that** the first pressure vessel and the second pressure vessel are cylindrical in design and each comprise at the end faces a first spherical segment and a second spherical segment, wherein at least one spherical segment of each pressure vessel is swivelable.

3. Energy supply apparatus as claimed in one of the preceding claims, **characterized in that** the pressure vessels comprise a length of 40 feet (12m).

4. Energy supply apparatus as claimed in one of the preceding claims, **characterized in that** the apparatus comprises a battery module (20), wherein the battery module (20) comprises battery elements, wherein the battery module (20) furthermore comprises an inverter, a battery monitoring system, a separating unit, a control unit, a transformer and/or a cooling unit.

5. Energy supply apparatus as claimed in one of the preceding claims, **characterized in that** the apparatus comprises a battery module (20), wherein the pressure vessel of the battery module (20) comprises a diameter of around 2 m.

6. Energy supply apparatus as claimed in one of the preceding claims, **characterized in that** the apparatus comprises a fuel cell module (30), wherein the pressure vessel of the fuel cell module (30) comprises a diameter of around 3 m.

7. Energy supply apparatus as claimed in one of the preceding claims, **characterized in that** the apparatus comprises a fuel cell module (30), wherein the fuel cell module (30) comprises at least a first fuel cell tank for oxygen and at least a second fuel cell tank for hydrogen.

8. Energy supply apparatus as claimed in one of the preceding claims, **characterized in that** the apparatus comprises a fuel cell module (30), wherein the fuel cell module (30) comprises a polymer electrolyte membrane fuel cell.

9. Energy supply apparatus as claimed in one of the preceding claims, **characterized in that** the apparatus comprises an air-independent Diesel module (70), wherein the pressure vessel of the air-independent Diesel module (70) comprises a diameter of around 3 m.

10. Energy supply apparatus as claimed in one of the preceding claims, **characterized in that** the apparatus comprises an air-independent Diesel module (70), wherein the air-independent Diesel module (70) comprises at least a first Diesel module tank for liquid oxygen and at least a second Diesel module tank for Diesel.

11. Energy supply apparatus as claimed in one of the preceding claims, **characterized in that** the apparatus comprises an air-independent Diesel module (70), wherein the air-independent Diesel module (70) comprises an absorber (51).

12. Energy supply apparatus according to one of the preceding claims, **characterized in that** the apparatus comprises a third module, wherein the third module is a further battery module (20).

## Revendications

1. Dispositif d'alimentation en énergie, le dispositif d'alimentation en énergie possédant au moins un premier module et un deuxième module, le dispositif d'alimentation en énergie possédant une première coque pressurisée et pouvant ainsi être utilisé sous l'eau, **caractérisé en ce que** le premier module possède la première coque pressurisée et **en ce que** le deuxième module possède une deuxième coque pressurisée, le premier module et le deuxième module étant sélectionnés indépendamment l'un de l'autre du groupe des générateurs de puissance indépendants de l'air ambiant, le groupe des générateurs de puissance indépendants de l'air ambiant comprenant un module à batterie (20), un module à pile à combustible (30), un moteur Stirling, une turbine Walter et un module diesel (70) indépendant de l'air extérieur, le dispositif possédant un bâti (10), les modules étant reliés au bâti (10), le premier module étant un module à batterie, le deuxième module étant sélectionné dans le groupe comprenant un module à pile à combustible, un moteur Stirling, une turbine Walter et un module diesel indépendant de l'air extérieur.

2. Dispositif d'alimentation en énergie selon la revendication 1, **caractérisé en ce que** la première coque pressurisée et la deuxième coque pressurisée sont réalisées cylindriques et possèdent respectivement un premier segment sphérique et un deuxième segment sphérique au niveau des côtés frontaux, au moins un segment sphérique de chaque coque sphérique étant pivotant.

3. Dispositif d'alimentation en énergie selon l'une des revendications précédentes, **caractérisé en ce que** les coques pressurisées présentent une longueur de 40 pieds (12 m) .

4. Dispositif d'alimentation en énergie selon l'une des revendications précédentes, **caractérisé en ce que** le dispositif possède un module à batterie (20), le module à batterie (20) possédant des éléments de batterie, le module à batterie (20) possédant en outre un onduleur, un système de surveillance de batterie, une unité de séparation, une unité de commande, un transformateur et/ou une unité de refroidissement.

5. Dispositif d'alimentation en énergie selon l'une des revendications précédentes, **caractérisé en ce que** le dispositif possède un module à batterie (20), la coque pressurisée du module à batterie (20) présentant un diamètre d'environ 2 m.

6. Dispositif d'alimentation en énergie selon l'une des revendications précédentes, **caractérisé en ce que** le dispositif possède un module à pile à combustible (30), la coque pressurisée du module à pile à combustible (30) présentant un diamètre d'environ 3 m.

7. Dispositif d'alimentation en énergie selon l'une des revendications précédentes, **caractérisé en ce que** le dispositif possède un module à pile à combustible (30), le module à pile à combustible (30) possédant au moins un premier réservoir de pile à combustible pour de l'oxygène et au moins un deuxième réservoir de pile à combustible pour de l'hydrogène.

8. Dispositif d'alimentation en énergie selon l'une des revendications précédentes, **caractérisé en ce que** le dispositif possède un module à pile à combustible (30), le module à pile à combustible (30) possédant une pile à combustible à membrane électrolyte polymère.

9. Dispositif d'alimentation en énergie selon l'une des revendications précédentes, **caractérisé en ce que** le dispositif possède un module diesel (70) indépendant de l'air extérieur, la coque pressurisée du module diesel (70) indépendant de l'air extérieur présentant un diamètre d'environ 3 m.

10. Dispositif d'alimentation en énergie selon l'une des revendications précédentes, **caractérisé en ce que** le dispositif possède un module diesel (70) indépendant de l'air extérieur, le module diesel (70) indépendant de l'air extérieur possédant au moins un premier réservoir de module diesel pour de l'oxygène liquide et au moins un deuxième réservoir de module diesel pour du gasoil.

11. Dispositif d'alimentation en énergie selon l'une des revendications précédentes, **caractérisé en ce que** le dispositif possède un module diesel (70) indépendant de l'air extérieur, le module diesel (70) indépendant de l'air extérieur possédant un absorbeur (51) .

12. Dispositif d'alimentation en énergie selon l'une des revendications précédentes, **caractérisé en ce que** le dispositif possède un troisième module, le troisième module étant un module à batterie (20) supplémentaire.
